Europäisches Patentamt

European Patent Office

Office européen des brevets

(19)

(11) Publication number: **0 302 393 B1**

# EUROPEAN PATENT SPECIFICATION

(45) Date of publication of patent specification: **02.02.94** (51) Int. Cl.⁵: **G11B 11/10**, G11B 13/04

(21) Application number: **88112255.0**

(22) Date of filing: **28.07.88**

(54) Magneto-optical recording medium.

(30) Priority: **03.08.87 JP 192642/87**

(43) Date of publication of application:
**08.02.89 Bulletin 89/06**

(45) Publication of the grant of the patent:
**02.02.94 Bulletin 94/05**

(84) Designated Contracting States:
**DE FR GB**

(56) References cited:
**EP-A- 0 161 807**

**PATENT ABSTRACTS OF JAPAN,vol. 12, no.6
(P-653)(2853), 9 January 1988**

**PATENT ABSTRACTS OF JAPAN,vol.10, no.
170(E-412)(2226),17 June 1986**

**PATENT ABSTRACTS OF JAPAN,vol. 10, no.
300 (P-506)(2356),14 October 1986**

**PATENT ABSTRACTS OF JAPAN, vol. 10, no.
26(P-425)(2083), 31 January 1986**

(73) Proprietor: **HITACHI, LTD.**
**6, Kanda Surugadai 4-chome**
**Chiyoda-ku, Tokyo 100(JP)**

Proprietor: **Hitachi Maxell Ltd.**
**No 1-1-88, Ushitora**
**Ibaraki-shi**
**Osaka-fu(JP)**

(72) Inventor: **Kirino, Fumiyoshi**
**4-7-7-401, Takaidohigashi**
**Suginami-ku Tokyo(JP)**
Inventor: **Ohta, Norio**
**306-462, Shinkou**
**Iruma-shi Saitama-ken(JP)**
Inventor: **Ogihara, Noriyuki**
**102 Dail-kujaku-sou**
**3-9-10, Higashikoigakubo**
**Kokubunji-shi Tokyo(JP)**

(74) Representative: **Strehl Schübel-Hopf Groening**
**& Partner**
**Maximilianstrasse 54**
**D-80538 München (DE)**

**Description**

The present invention relates to a magneto-optical recording medium in which information is written, erased, and read by making use of a laser beam and particularly to a magneto-optical recording medium having high reliability.

In recent years, with the progress of an information oriented society, attention has been paid to high density recording. In particular, since information recording in which light is used enables high density recording, various systems for this type of information recording have been studied. Among them, magneto-optical recording is said to be in the nearest position to the practical use as an optical recording system in which information is erasable. Alloys, e.g., particularly rare earth element-iron group element alloys, have the brightest prospects as a material for the above-described magneto-optical recording. However, since these alloys containing a rare earth element are liable to be corroded, it was impossible to prepare a magneto-optical disk having high reliability by making use of these alloys per se. For this reason, in the prior art, an attempt has been made to improve the reliability by adding an element capable of preventing the corrosion without deteriorating the magneto-optical properties. Examples of the prior art include JP-A-61-84004, 61-87306, 61-117749, 61-84802, 61-107555, 61-113155, 61-51806, 61-6807, 62-165753 and 61-22608, this last document disclosing a recording medium with the features included in the first part of claim 1.

In the above-described prior art, the corrosion resistance of the magneto-optical recording material is improved by adding thereto an element capable of suppressing the corrosion. The corrosion caused in a magneto-optical recording material is classified into the following three types. The first type is corrosion due to oxidation. Oxygen in the air mainly takes part in this type of corrosion. The second type is wet corrosion. Moisture and oxygen in the air mainly take part in the progress of this type of corrosion. The third type is pitting corrosion which occurs locally. Corrosive ions, such as halogen, and foreign materials, such as electrochemically noble elements, which are typical of impurities take part in this type of corrosion. In an actual environment, these three types of corrosion simultaneously occur. Therefore, the above-described three types of corrosion should be simultaneously prevented without deteriorating the magnetic properties. However, in the prior art, it was impossible to simultaneously prevent the above-described three types of corrosion. For example, the addition of elements for suppressing the oxidation and wet corrosion cannot often sufficiently prevent the pitting corrosion, and vice versa. Since the corrosion is a serious problem associated with the reliability and service life of a magneto-optical disk, this problem should be solved for putting the disk into practical use.

Further, in recent years, in order to prepare a magneto-optical recording medium having excellent magnetic performance, a proposal has been made on the formation of a multi-layer structure by combining rare earth element-iron group alloy recording layers having different magnetic properties. For example, examples of such a proposal include one described on page 721 of Preprints of The 47th Symposium of The Japan Society of Applied Physics, Spring, 1987.

Summary of the Invention

An object of the present invention is to provide a magneto-optical recording medium which can simultaneously suppress typical kinds of corrosion with respect to a magneto-optical recording film, i.e., wet corrosion, oxidation, and pitting corrosion, without deteriorating the magnetic properties and magneto-optical properties of the magneto-optical recording medium and exhibits a long service life and high reliability.

The above-described object can be attained by the invention as defined in claim 1. $X_2$ is an element having magnetic properties such that the magnetic moment of an iron group element is apparently increased. Although pitting corrosion is remarkably suppressed, an effect of preventing wet corrosion and oxidation corrosion is poor. $X_1$ is an element having magnetic properties such that the magnetic moment of an iron group element is apparently decreased. In a preferred embodiment, at least one passivated state forming element selected from among Ti, Ta, Nb, Aℓ and Cr and at least one noble metal element selected from among Pt, Pd, Rh and Au are simultaneously added to each recording layer and a layer containing nitrogen is provided near the surface of the recording layer on the information read side or the surface opposite thereto or both of the above-described surfaces.

The above-described rare earth element is preferably at least one element selected from the group consisting of Tb, Gd, Nd, Pr, Sm, Dy, Ho, Ce, and Yb, particularly preferably at least one element selected from the group consisting of Tb, Gd, Dy, Ho, Pr and Ce, and the above-described iron group element is at least one element selected from the group consisting of Fe, Co and Ni, particularly preferably Fe and/or Co.

2

Passive metal such as Ti, Ta, Nb, Cr and Al ($X_1$) and noble metal such as Pt, Pd, Rh and Au ($X_2$) added to rare earth-transition metal have two effects. One is higher corrosion resistance than one element added to rare earth-transition metal alloy. Because addition of $X_1$ and $X_2$ to rare earth-transition metal alloy is able to contain higher content of $X_1$ and $X_2$ than one element addition. And the other is that the magnetic properties such as saturated magnetization Ms, perpendicular magnetization energy Ku and Kerr rotation angle $\theta$k do not change at all. In this case, addition of $X_1$ to rare earth-transition metal alloy causes moving to a more rare earth rich composition. But addition of $X_2$ to rare earth-transition metal alloy causes moving to a transition metal rich composition. The most important thing, in this case, is the balance $X_1$ and $X_2$ on magnetic properties. A proper balance addition of $X_1$ and $X_2$ to rare earth transition metal alloy does not change the magnetic properties, and the only change is that the magneto-optical recording medium has a high corrosion resistance.

The total amount of $X_1$ and $x_2$ added to the rare earth element-iron group element alloy is 20 atomic % or less, preferably 15 atomic % or less. When the total amount of $X_1$ and $X_2$ exceeds the above-described range, the perpendicular magnetic anisotropy energy is remarkably lowered, which unfavorably makes it difficult for the alloy film to stably exist as a perpendicular magnetic film. Further, the amounts of $X_1$ and $X_2$ are particularly preferably 1 atomic % or more and 2 atomic % or more, respectively, from the viewpoint of improving the corrosion resistance and each most preferably 3 atomic % or more. However, in order to suppress the lowering in the perpendicular magnetic anisotropy energy, it is preferred that the amounts of $X_1$ and $X_2$ be each 10 atomic % or less.

When the amounts of $X_1$ and $X_2$ are each in the above-described range, not only the above-described three types of corrosion can simultaneously be suppressed but also magnetic properties and magneto-optical properties superior to those of the conventional magneto-optical recording alloy film having improved corrosion resistance can be imparted to the recording film.

In order to attain particularly excellent magnetic properties and magneto-optical properties, the ratio of the amount of $X_2$ to the amount of $X_1$ in terms of atomic % (namely, molar ratio, and hereinafter referred to as the "$X_2/X_1$") is preferably 1/1 to3/1, more preferably 2/1 to 4/3.

The magneto-optical recording alloy film comprising a rare earth element-iron group element alloy is generally used in an amorphous form in order to reduce the noise of the medium and to easily prepare a homogeneous large area.

It is needless to say that the magneto-optical recording medium generally has a substrate and a magneto-optical recording film provided directly over the substrate or provided indirectly thereover through other film and the easy axis of magnetization of the magneto-optical recording film is perpendicular to the surface of the substrate.

In the magneto-optical recording medium made of the above-described alloy, the corrosion resistance can remarkably be enhanced without spoiling the magnetic properties and the magneto-optical properties by particularly increasing the concentration of $X_1$ and/or $X_2$ around the boundary between the film and the substrate and around the surface of the film remote from the substrate. The region around the boundary between the film and the substrate is intended to mean a region, e.g., within 4 to 5 nm from the boundary and the region around the surface of the film remote from the substrate is intended to mean a region, e.g., within 10 to 15 nm from the surface of the film. The concentration of $X_1$ and/or $X_2$ in this portion may be about 100% at the maximum. The high concentration region of $X_1$ and/or $X_2$ is not limited to the above-described range and can be increased as far as the magnetic properties and the magneto-optical properties are not lowered to such an extent that the purpose of using $X_1$ and/or $X_2$ cannot be attained.

The above-described ratio of the rare earth element to the iron group element may be within such a range as will provide the magnetic properties and the magneto-optical properties sufficient for use in the magneto-optical recording medium, and the composition ratio of the alloy used in the conventional magneto-optical recording film may be adopted. Even when at least two rare earth elements and at least two iron group elements are used, the content ratio of the rare earth elements to the iron group elements is the same as that described above.

When the composition of the alloy constituting the magneto-optical recording film is represented by the formula $(RE_{1-y}TM_y)_{1-x}(X_{1a}X_{2b})_x$, y is usually $0.18 \leq y \leq 0.35$. In this range, the perpendicular magnetic anisotropy energy is so high that the alloy film can be stably present as a perpendicular magnetic film. In the above-described formula, RE represents a rare earth element and TM an iron group element.

The thickness of the magneto-optical recording film may be in a range sufficient for use as a magneto-optical recording medium, and the thickness range used in the conventional magneto-optical recording film may be adopted in the present invention. The magneto-optical recording media having a thickness of 10 to 40 nm and 80 to 100 nm are known in the art. The former has a combination of the Kerr effect with the Faraday effect.

The additive element $X_1$ exerts such an action with respect to the magnetic properties that the moment of the iron group element is apparently decreased. With respect to the corrosion resistance, although the additive element $X_1$ has an effect of remarkably enhancing the resistance to the wet corrosion and oxidation, it is relatively poor in the effect of preventing the pitting corrosion. On the other hand, the additive element $X_2$ exerts such an action with respect to the magnetic properties that the moment of the iron group element is apparently increased. With respect to the corrosion resistance, although the additive element $X_2$ has an effect of remarkably enhancing the resistance to the pitting corrosion, it is poor in the effect of preventing the wet corrosion.

When only an improvement in the corrosion resistance is intended, it is apparent that the effect of preventing the corrosion is increased with an increase in the concentration of the additive element. However, in the prior art, the Kerr rotation angle governing the electric signal characteristics, the coercive force having an influence on the data holding properties, and the Curie temperature having an influence on the Kerr rotation angle and the recording sensitivity, etc. among the magnetic properties imposed restrictions on the amount of the additive element. When the concentration of the additive elements was excessively increased by thoughtlessly adding the additive element, the lowering in the above-described magnetic and magneto-optical properties was observed without waiting for the discussion of the perpendicular magnetic anisotropy energy, so that the film could not be used as a magneto-optical recording film.

On the other hand, when two elements $X_1$ and $X_2$ which are complementary to each other with respect to not only the magnetic properties but also the corrosion resistance are simultaneously added, the above-described three types of corrosion can greatly be suppressed without causing any lowering in the magnetic properties. Further, when the concentrations of $X_1$ and $X_2$ are controlled by taking advantage of the above-described property, the above-described magnetic properties can freely be controlled. The total amount of $X_1$ and $X_2$ is up to such an amount as will not make the perpendicular magnetic film unstable due to a lowering in the perpendicular magnetic anisotropy energy. The total amount of $X_1$ and $X_2$ in which the magneto-optical recording film can stably be present as a perpendicular magnetic film is 20 atomic %, preferably 15 atomic %. This amount is 3 times or more that used in the prior art.

The magneto-optical recording medium of the present invention may have the same construction as that of the conventional magneto-optical recording medium, except that the magneto-optical recording film is made of an alloy having the above-described composition.

Further, the provision of a layer containing nitrogen near the surface of the recording layer on the information read side or the surface opposite thereto or both of the above-described surfaces contributes to a further improvement in the corrosion resistance because the layer containing nitrogen is remarkably small in the coefficient of oxygen diffusion and less susceptible to staining with corrosive ions.

Brief Description of the Drawings

Fig. 1 is a schematic cross-sectional view of one example of the magneto-optical recording medium of the present invention;

Fig. 2 is a graph showing the relationship among the Kerr rotation angle, the Curie temperature, the reflectivity, and the amount of addition of Nb or Pt of a magneto-optical recording film comprising a Tb-Fe-Co-base alloy;

Fig. 3 is a graph showing the change in the saturated magnetization and C/N with time under high temperature and high humidity conditions of magneto-optical recording media made of various Tb-Fe-Co-base alloys;

Fig. 4 is a graph showing the change in the light transmittance with time of magneto-optical recording media made of various Tb-Fe-Co alloys in the case of the immersion of the media in an aqueous NaCℓ solution;

Fig. 5 is a graph showing the change in the saturated magnetization and C/N with time under high temperature and high humidity conditions of magneto-optical recording media respectively made of a Gd-Tb-Fe-Co alloy and a Gd-Tb-Fe-Co-Nb-Pt alloy;

Fig. 6 is a graph showing the change in the light transmittance with time of magneto-optical recording media respectively made of a Gd-Tb-Fe-Co alloy and a Gd-Tb-Fe-Co-Nb-Pt alloy in the case of the immersion of the media in an aqueous NaCℓ solution;

Fig. 7 is a graph showing the change in the C/N and the error rate under high temperature and high humidity conditions of various Tb-Nd-Fe-Co-base alloys, Tb-Pr-Fe-Co alloys and Tb-Ce-Fe-Co alloys;

Fig. 8 is a schematic cross-sectional view of another example of the magneto-optical recording medium of the present invention;

4

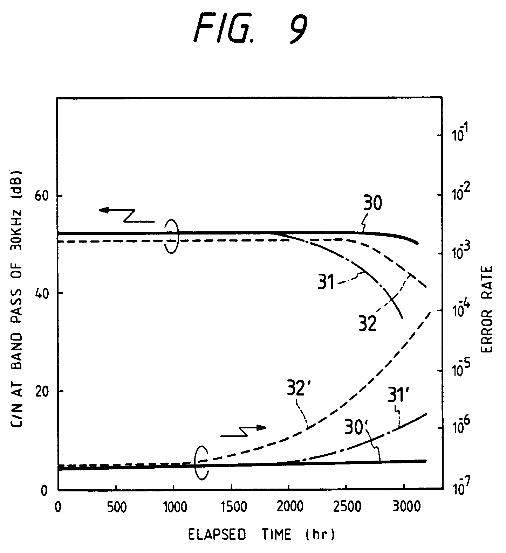

Fig. 9 is a graph showing the change in the C/N and the error rate of magneto-optical media respectively made of a Gd-Tb-Co-Ti-Rh alloy, a Gd-Tb-Co-Rh alloy and a Gd-Tb-Co-Ti alloy.

Figs. 10 and 13 are schematic cross-sectional views of magneto-optical recording media according to the present invention; and

Figs. 11 and 12 are graphs showing the change in the C/N and bit error rate with time of magneto-optical recording media according to the present invention and reference samples in the case where the samples are allowed to stand in an atmosphere having a temperature of 60°C and a relative humidity of 95%.

Description of the Preferred Embodiments

Example 1

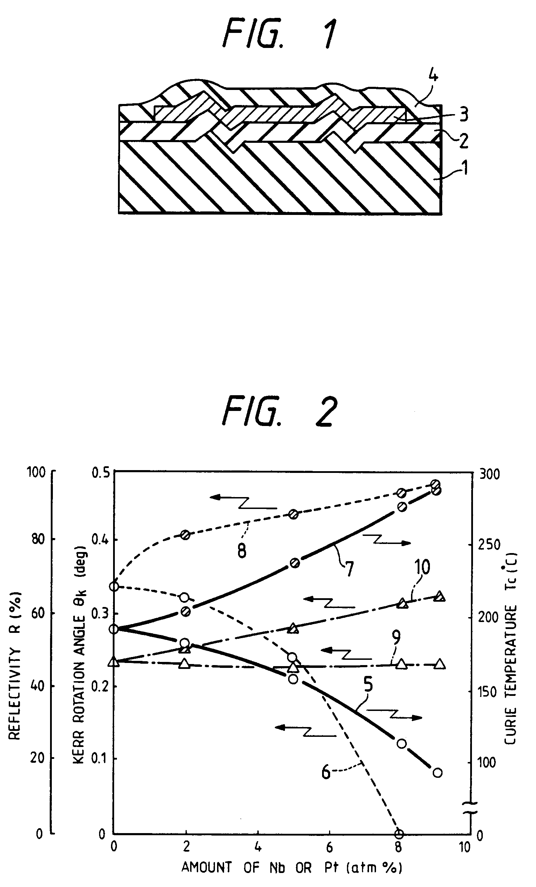

Fig. 1 is a schematic cross-sectional view of a magneto-optical disk prepared in the present Example. The uneven portions of a substrate 1 are each a schematic representation of a guide groove. This disk was prepared as follows.

First of all, on a glass or plastic substrate 1 having a diameter of 130 nm and provided with an uneven pattern on the surface thereof was formed an 80 nm thick underfilm 2 comprising a $Si_3N_4$ film (which causes the Kerr rotation angle $\theta_k$ to apparently be increased due to multi-reflection) by sputtering. The sputtering was conducted by making use of a target comprising $Si_3N_4$ and a mixed gas comprising Ar and $N_2$ in an Ar to $N_2$ ratio of 85/15 at an input high frequency power density of 4.5 $W/cm^2$ under a discharge gas pressure of 1.0 Pa. An inline magnetron sputtering machine of substrate passing type was used as the sputtering apparatus. A magneto-optical recording film 3 and a protective film 4 were successively laminated on the underfilm 2. In the present Example, Nb and Pt were added as the $X_1$ element and the $X_2$ element, respectively, to the magneto-optical recording film 3 comprising a TbFeCo film. The recording film 3 was formed as follows. A composite target comprising an FeCoNb alloy disk sheet and Tb chips and Pt chips each uniformly disposed thereon was used as the target. The sputtering was conducted by making use of Ar as the discharge gas at an input high frequency power density of 4.5 $W/cm^2$ under a discharge gas pressure of 0.5 Pa to form a film having a thickness of 100 nm. Then, a $Si_3N_4$ protective film 4 was formed thereon. In the preparation of the protective film, the target and the gas constituting the atmosphere were the same as those used in the formation of the above-described underfilm 2, and the sputtering conditions were also the same as those employed in the formation of the underfilm 2, except that the sputtering gas pressure was 2 Pa. The thickness of the formed film was 200 nm. The magneto-optical disk thus prepared had the following magnetic properties: $\theta_k$ = 0.60°, coercive force $H_c$ = 5.6 x $10^5$ A/m, Curie temperature $T_c$ = 200°C, compensation temperature $T_{comp}$ = 80°C, and film composition = $(Tb_{40}Fe_{40}Co_{20})_{85}(Nb_{40}Pt_{60})_{15}$. As shown in Fig. 2, when only Nb which is an $X_1$ element was added to (TbFeCo), the Kerr rotation angle $\theta_k$ (curve 6) and Curie temperature $T_c$ (curve 5) were each decreased with an increase in the amount of addition of the element and the reflectivity R (curve 9) remained unchanged. On the other hand, when only Pt which is an $X_2$ element was added, as shown in curves 7, 8, and 10 of Fig. 2, $T_c$, $\theta_k$, and R were all increased with an increase in the amount of addition of the element in contrast with the case where Nb was added. Therefore, the regulation of both the ratio of the amount of Nb to the amount of Pt and the total amount of Nb and Pt enables the amount of addition of the element capable of improving the corrosion resistance to be increased while maintaining the $\theta_k$ and $T_c$ values each constant without making the magnetic properties inferior to those of the case where only Pt or Nb was added. When Pt was added as the $X_2$ element, the reflectivity of the film was also increased by about 10 to 15%, which contributed to a 1 to 2 dB improvement in the electric signal characteristics (particularly reproducing output).

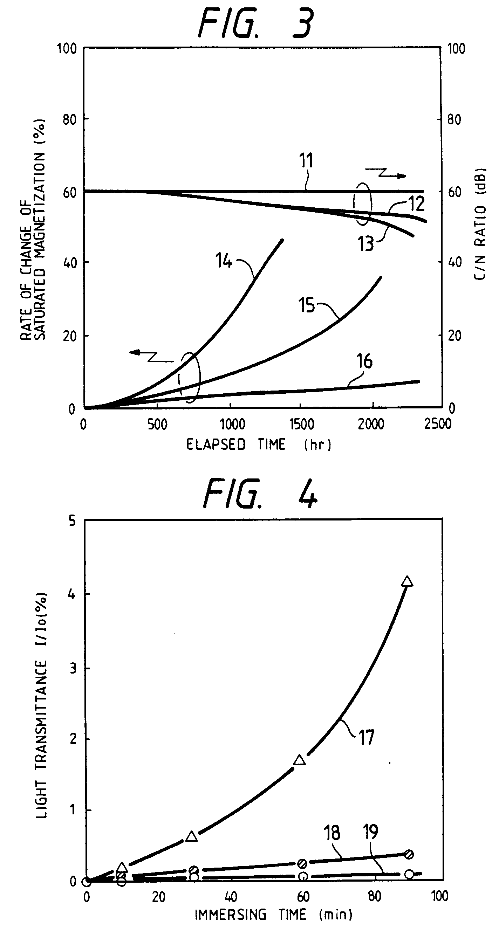

In order to conduct a corrosion resistance test with respect to wet corrosion, the magneto-optical disk prepared in the present Example and a sample prepared by forming a recording medium of the present Example on a glass substrate were each allowed to stand in an atmosphere having a temperature of 60°C and a relative humidity of 95%. The life of the film was evaluated in terms of the electric signal characteristics (carrier-to-noise ratio: C/N) of the disk and in terms of the rate of change of saturated magnetization Ms (%) of the sample formed directly on the glass substrate. When Ms observed after allowing the sample to stand for t hr and Ms observed before allowing the sample to stand are represented by Ms(t) and Ms(o), respectively, the rate of change of Ms is represented by 100(Ms(t) - Ms(o))/Ms(o). Fig. 3 is a graph showing the relationship between the C/N (curve 11) and the rate of change of saturated magnetization (curve 16) and the elapsed time. For comparison, the results of the corrosion test on $Tb_{24}Fe_{63}Co_{10}Nb_3$ containing only $X_1$ as the additive element, $Tb_{27}Fe_{59}Co_{10}Pt_4$ containing only $X_2$ as the

additive element, and $Tb_{26}Fe_{64}Co_{10}$ containing neither $X_1$ nor $X_2$ were also shown in Fig. 3. In Fig. 3, curve 11 represents the C/N in the case where the above-described Tb-Fe-Co-Nb-Pt alloy (alloy according to the present invention) and the above-described Tb-Fe-Co-Nb alloy were used, curve 12 represents the C/N in the case where the above-described Tb-Fe-Co alloy was used, curve 13 represents the C/N in the case where the above-described Tb-Fe-Co-Pt alloy was used, curve 14 represents the rate of change of Ms in the case where the above-described Tb-Fe-Co-Pt alloy was used, curve 15 represents the rate of change of Ms in the case where the above-described Tb-Fe-Co alloy was used, and curve 16 represents the rate of change of Ms in the case where the above-described Tb-Fe-Co-Nb-Pt alloy (alloy according to the present invention) and the above-described Tb-Fe-Co-Nb alloy were used.

As can be seen from curves 14 to 16 of Fig. 3 showing the rate of change of Ms, the TbFeCoPt film (curve 14) was inferior to the TbFeCo film (curve 15) in the resistance to the wet corrosion, i.e., Pt accelerated the wet corrosion. On the other hand, the TbFeCoNb film (curve 16) and the TbFeCoNbPt film (curve 16) exhibited substantially the same corrosion resistance. This is substantiated also by the results of the test on the C/N (curves 11 to 13).

Then, the test on the occurrence of the pitting corrosion was conducted by immersing a specimen formed on glass in an aqueous 1 N NaCℓ solution and determining the change in the light transmittance $I/I_0$ of the sample with time. The wavelength of the light used was 822 nm, and the light spot had a rectangular shape of 7 mm in long side and 6 mm in short side. The results are shown in Fig. 4. As shown in curve 17, in the TbFeCo system free from any additive element, the $I/I_0$ was increased. This is because numerous circular pits having a diameter of 10 to 20 $\mu$m occurred in the alloy film. In the TbFeCoNb film (curve 18), a small number of small pits having a diameter of 1 to 2 $\mu$m occurred in the alloy film, which brought about a slight increase in the $I/I_0$ value. On the other hand, in the TbFeCoPt film and TbFeCoNbPt film (curve 19), the pitting corrosion hardly occurred, so that little or no change in the $I/I_0$ was observed. Thus, it has been found that the TbFeCoNbPt film and TbFeCoPt film have excellent resistance to the pitting corrosion.

It is apparent from the foregoing description that the TbFeCoNbPt film of the present Example is excellent in the resistance to the three types of corrosion, i.e., oxidation, wet corrosion and pitting corrosion, and is a magneto-optical magnetic material having high corrosion resistance. The same effects on the magnetic properties and the corrosion resistance were attained when Ti, Ta, Cr, and Aℓ were used instead of Nb. Further, also when Rh, Pd, and Au were used instead of Pt, the same effects could be attained.

The corrosion resistance with respect to oxidation was examined by maintaining the magneto-optical recording films respectively made of the above-described Tb-Fe-Co-Nb-Pt alloy (alloy according to the present invention), Tb-Fe-Co-Nb alloy, and Tb-Fe-Co alloy at a temperature of 150 to 200°C in the air and determining the rate of change of Ms with time in the same manner as that described above. As a result, it was confirmed that the magneto-optical recording film made of $(Tb_{40}Fe_{40}Co_{20})_{85}(Nb_{40}Pt_{60})_{15}$ alloy in this Example brings about little or no change in Ms even when allowed to stand in the abovedescribed atmosphere for a long period of time.

The time taken for the Kerr rotation angle of the magneto-optical recording film of the disk of the present Example to be lowered by 30 % was measured at various temperatures. The reciprocal of the time was plotted as a rate of reaction to prepare an Arrhenius' equation curve. It was estimated from the extrapolation value with respect to 25°C that the service life of the disk of the present Example is 15 to 20 years. Since the service life of the conventional disk containing only one additive element was about 10 years, the service life of the disk could be increased by a factor of 1.5 to 2 in the present Example.

Example 2

The structure of the magneto-optical disk prepared in this Example was the same as that of Example 1 and was as shown in Fig. 1. The same materials as those of Example 1 were used for the substrate 1, underfilm 2, and protective film 4, and the sputtering was conducted under the same conditions as those of Example 1. The present Example is different from Example 1 in that $(Gd_{70}Tb_{30})_{26}(Fe_{0.8}Co_{0.2})_{67}(Nb_4Pt_6)_7$ was used.

A recording film was prepared under the same sputtering conditions as those of Example 1 by making use of a sputter target comprising an FeCoNbPt alloy target having a size of 5 in. and a GdTb alloy chip (10 mm square) disposed thereon and a discharge gas comprising Ar. The magneto-optical disk thus prepared and a film sample formed by direct sputtering on a glass substrate were each stored in an atmosphere having a temperature of 60°C and a relative humidity of 95%. At this time, the change in the saturation magnetization Ms with time was measured with respect to the film formed on the glass substrate, and the change in the C/N with time was measured with respect to the magneto-optical disk. The magneto-optical magnetic material exhibited the following characteristics: $\theta_k$ = 0.42°, $T_c$ = 200°C, $T_{comp}$ = 85°C, and $H_c$

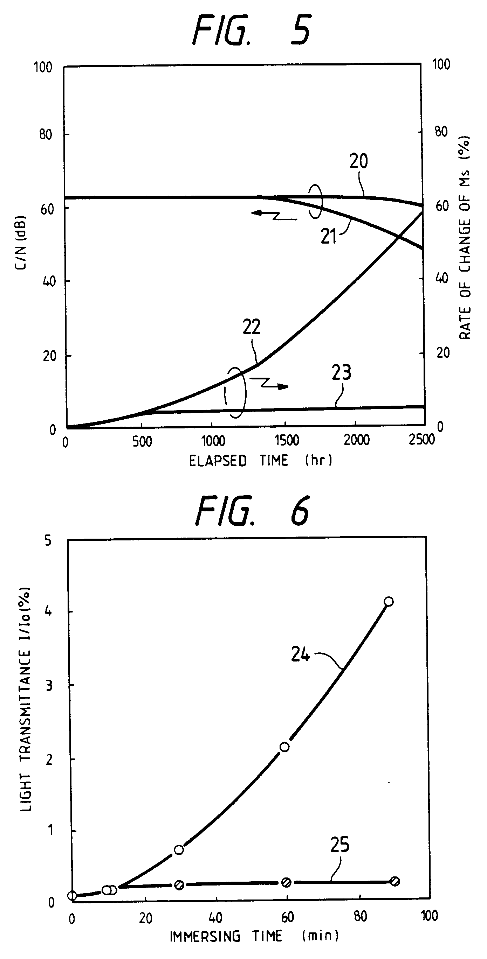

= 4 x 10$^5$ A/m. The change in the C/N and Ms with time is shown in Fig. 5. For comparison, the results of the same test conducted with respect to a magneto-optical magnetic material free from Nb and Pt, i.e., a magneto-optical magnetic material in which a GdTbFeCo-base alloy containing neither X$_1$ nor X$_2$ additive element was used was also shown in Fig. 5. It is apparent from these results that as shown in curve 20, the GdTbFeCoNbPt system of the present Example exhibits little or no change in the C/N even when the elapsed time exceeds 2000 hr and has remarkably improved corrosion resistance over the system free from NbPt (curve 21). With respect to the rate of change of Ms, as shown in curve 23, the GdTbFeCoNbPt system according to the present invention exhibited an about 5% increase in Ms in the initial elapsed time and thereafter remained substantially constant. On the other hand, in the system free from NbPt, as shown in curve 22, the rate of change of Ms was increased with the elapsed time. Thus, it is apparent that the disk of the present Example has very excellent resistance to the wet corrosion.

Next, the test on the pitting corrosion was conducted. The pitting corrosion test was conducted in the same manner as that of Example 1, and the change in the light transmittance with time in the case of immersion in an aqueous 1 N NaCℓ solution was studied. The results are shown in Fig. 6. As can be seen from the drawing, in the GdTbFeCo-base thin film containing neither X$_1$ nor X$_2$ additive element, the pitting corrosion occurred and the light transmittance was increased with the lapse of the immersing time (see curve 24). On the other hand, in the GdTbFeCoNbPt system of the present Example, the light transmittance was slightly increased in the initial period of the immersion (see curve 25) and thereafter remained substantially constant. The film was observed under a microscope. Although slight microscopic pitting corrosion of about 1 μm was observed, neither more pitting corrosion nor growth of the formed pits was observed in this film. Thus, the addition of Nb and Pt brings about an effect of suppressing not only the pitting corrosion per se but also the growth of the formed pits.

As is apparent from the foregoing description, it is possible to simultaneously and remarkably suppress the wetting corrosion and the pitting corrosion without spoiling the magneto-optical characteristics. The same effect could be attained when Ti, Ta, Aℓ, and Cr were used instead of Nb and when Rh, Pd, and Au were used instead of Pt. The service life of this disk estimated in the same manner as that of Example 1 was 15 to 20 years. That is, the disk exhibited a prolonged service life twice or more longer than that in the case where no additive elements were added, i.e., about one year, and that in the case where only one additive element was added, i.e., about 8 years.

Example 3

The structure of the magneto-optical disk prepared in this Example was the same as that of Example 1 and was as shown in Fig. 1. The disk substrate 1, underfilm 2, and protective film 4 were formed by making use of the same materials as those of Example 1 under the same conditions as those of Example 1. The present Example was different from Example 1 in the magnetic material of the recording film 3, i.e., in that an alloy target having a composition represented by the formula $(Tb_{0.7}Nd_{0.3})_{26}$ $(Fe_{0.8}Co_{0.2})_{67}$ $(Cr_4Pt_6)_7$ was used to prepare a recording medium having the same composition. The recording film was prepared under the same sputtering conditions as those of Example 1 by making use of a discharge gas comprising Ar. Further, a magneto-optical disk in which Pr or Ce was used instead of Nd in the above-described composition and a comparative magneto-optical disk comprising a $(Tb_{0.7}Nd_{0.3})_{26}$ $(Fe_{0.8}Co_{0.2})_{70}Cr_4$ system (wherein Nd may be substituted with Ce or Pr) free from Pd were also prepared.

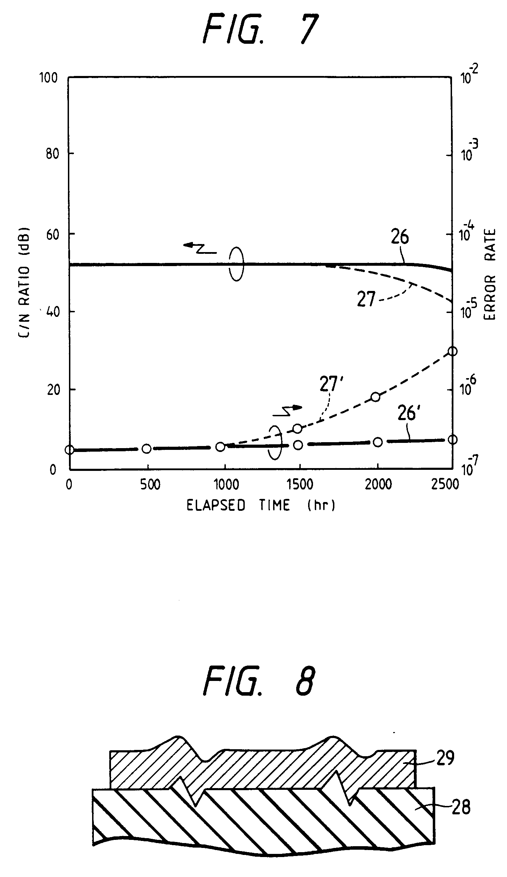

The disks thus prepared were allowed to stand in a high temperature and high humidity environment having a temperature of 60°C and a relative humidity of 95% to measure the change in the C/N and error rate with time. The results are shown in Fig. 7. For comparison, the change in the C/N and error rate with time in the case where a sample containing no Pd was allowed to stand was also shown in Fig. 7. When this disk was considered as comprising three divided portions, i.e., an inner peripheral portion near the center of the disk, an outer peripheral portion near the circumferential portion of the disk, and an intermediate peripheral portion located between the above-described two portions, the corrosion occurred most seriously at the outer peripheral portion. In particular, pitting corrosion occurred at that portion in the conventional magneto-optical disk. For this reason, the C/N and error rate were evaluated at the outer peripheral portion of the disk.

In the prior art, the addition of Cr to an amorphous alloy comprising rare earth element-iron group element enabled the pitting corrosion to be suppressed to a considerable estent. However, this expedient was insufficient yet for code data recording. On the other hand, the simultaneous addition of Cr and Pd to this system made it possible to remarkably suppress the pitting corrosion. Specifically, as shown in curve 26, the C/N of the disk of the present Example began to decrease little by little after about 2000 hr. On the other hand, as shown in curve 27, the disk which was outside the scope of the present invention (i.e., in which no Pd was contained), the C/N began to decrease after 1500 hr. The comparison in the error rate made the difference between these disks more clear. Specifically, as shown in curve 26′, the disk of the present Example exhibited little or no change in the error rate, while as shown in curve 27′, the disk in which Cr and Pd were not simultaneously contained (i.e., only Cr was contained) caused the error rate to begin to increase after 1000 hr and exhibited an increase in the error rate by one figure or more after 2500 hr. The same excellent effect with respect to the change in the C/N and error rate was attained in the case of TbPrFeCoCrPd and TbCeFeCoCrPd systems as well.

This recording film was subjected to the measurement of the magnetic properties and found to have the following properties: $\theta_k = 0.38°$ and $H_c = 6.4 \times 10^5$ A/m. That is, there was no difference in the magnetic properties such as $\theta k$ between the above-described recording film and TbFeCo systems. Further, the perpendicular magnetic anisotropy energy $K_u$ of the above-described recording film was $6 \times 10^4$ kJ/m$^3$, i.e., was sufficiently large. The Curie temperature $T_c$ and the compensation temperature $T_{comp}$ were 200°C and 80°C, respectively.

Example 4

The present Example describes the use of a GdTbCoTiRh system as a magneto-optical material. The magneto-optical disk prepared in this Example had a cross section as shown in Fig. 8. The magneto-optical disk was prepared by the following method. A GdTbCoTiRh-base magneto-optical recording film 29 was formed on a glass or plastic substrate 28 by sputtering. A composite target comprising a Co disk and, uniformly disposed thereon, an alloy chip having a composition represented by the formula $Gd_{60}Tb_{40}$ was used as target I, while an alloy disk having a composition represented by the formula $Ti_{70}Rh_{30}$ was used as target II. The recording film was formed by DC sputtering. The concentrations of additive elements, i.e., Ti and Rh, was controlled by regulating the current flowing between the target substrates. The concentrations of Ti and Rh were controlled so as to provide a gradient of the composition in such a manner that the concentrations of Ti and Rh are high near the boundary between the substrate and the recording film (region up to 5nm from the substrate) and near the surface of the film (region up to 15 nm from the surface) (for example, the concentrations of Ti and Rh may be substantially 100% at the boundary portion and the surface portion). For comparison, a disk free from Ti or Rh was formed in the same manner as that described above.

That portion of the magneto-optical recording film thus prepared in which none of Ti and Rh were in a concentrated state had a composition represented by the formula $(Gd_{70}Tb_{30})_{0.23}Co_{0.67}(Ti_{45}Rh_{65})_{0.10}$. This film had the following magnetic properties: Kerr rotation angle $\theta_k = 0.40°$, coercive force Hc = $4.8 \times 10^5$ A/m, Curie temperature $T_c = 200°C$, compensation temperature $T_{comp} = 80°C$, and perpendicualr magnetic anisotropy energy $K_u = 4 \times 10^5$ J/cm$^3$. That is, no difference in the magnetic properties was observed between the above-described film and the conventional disks having an optimal composition in the GdTbFeCo system.

Thereafter, these disks were subjected to service life and signal tests. The method and condition of these tests were the same as those of Example 1. The disk samples were allowed to stand in an environment having a temperature of 60°C and a relative humidity of 95% to measure the change in the C/N and the error rate with time. As shown in curves 30 and 30′, the disks according to the present invention exhibited little or no change in the C/N and error rate after being allowed to stand in an environment having a temperature of 60°C and a relative humidity of 95% for 3000 hr. On the other hand, with respect to the comparative disks, as shown in curve 31, the C/N of the disk containing only Rh (Comparative Example I) began to decrease after 1500 hr and rapidly decreased when the elapsed time exceeded 2000 hr. However, as shown in curve 31′, the error rate began to gradually increase after 2000 hr and increased by about one figure after 3000 hr. Further, in the disk comprising a magneto-optical material containing only Ti (Comparative Example II), as shown in curve 32, the change in the C/N was smaller than that in the case of Comparative Example I, and the C/N began to gradually decrease after about 2000 hr. The reason for the C/N in Comparative Example II to be by 3 dB lower than that in Comparative Example I resides in that since the disk contains no Rh, the reflectivity is by 10% lower than the disk of Comparative Example II. However, in Comparative Example II, as shown in curve 32′, the error rate began to increase after about 1000 hr and rapidly increased after 2000 hr. The above results substantiate that the simultaneous addition of two kinds of elements which are complementary to each other with respect to magnetic properties as well as corrosion resistance brings about not only an additive effect but also a great synergetic effect on the resistance to pitting corrosion and wet corrosion in the corrosion resistance without causing any lowering in the magnetic properties.

Further, when the concentration gradient is provided in the direction of the film thickness as described in the present Example, it is possible to use the film as a recording film even when the concentrations of $X_1$ and $X_2$ at a portion near the boundary between the substrate and the recording film and a portion near the surface of the recording film are such that usual magnetic properties disappear, which enables these portions to serve also as a protective film.

Example 5

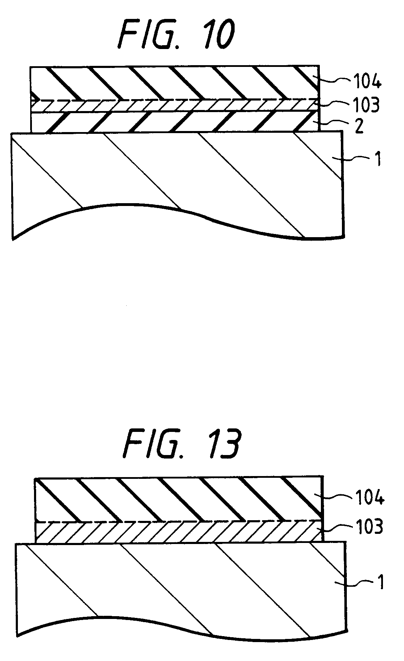

Fig. 10 is a schematic cross-sectional view of the magneto-optical recording medium (disk) of the present invention comprising a substrate 1, an underfilm 2, a first recording layer 103, and a second recording layer 104.

First of all, sputter etching of a substrate 1 (made of glass or transparent plastic) was conducted by making use of a discharge gas comprising Ar. Thereafter, sputtering was conducted for 20 min by making use of a discharge gas comprising Ar and a sputter target comprising $ZrO_2$ sinter under a discharge gas pressure of 1 Pa at an input RF power density of 4.2 $W/cm^2$, thereby forming an underfilm 2 having a thickness of 75 nm and a refractive index n of 2.10. Then, sputtering was further conducted for 2 min by making use of a discharge gas comprising Ar and a sputter target comprising $(Gd_{0.9}Tb_{0.1})_{23}$ $(Fe_{0.7}Co_{0.3})_{70}$-$(Pt_{0.6}Nb_{0.4})_7$ under a discharge gas pressure of 0.5 Pa at an input RF power density of 4.2 $W/cm^2$, thereby forming a first recording layer 103 having a thickness of 20 nm Subsequently, sputtering was conducted for 5 min by making use of a discharge gas comprising Ar and a sputter target comprising an alloy having the following composition, Ar, $Tb_{24}Fe_{53}Co_{15}Nb_3Pt_5$, under a discharge gas pressure of 0.5 Pa at an input RF power density of 4.5 $W/cm^2$. Further, the atmospheric gas was switched over from Ar to $N_2$ without discontinuing the discharge, followed by sputtering under the same conditions as those described above, thereby forming a second recording layer 104 having a thickness of 80 nm

A sample which comprised a first recording layer comprising Gd, Tb, Fe and Co only, i.e., the above-described recording layer composition free from Nb and Pt, and a second recording layer comprising Tb, Fe and Co only and in which sputtering in a $N_2$ gas atmosphere had been finally conducted was prepared as a reference sample (I).

The magnetic properties of the two samples prepared above were evaluated. The sample of the present invention had the following magnetic properties: $\theta_k$ = 0.79°, $H_c$ = 4.8 x $10^5$ A/m, $T_c$ = 210°C, and $T_{comp}$ = 80°C, while the reference sample (I) had the following magnetic properties: $\theta_k$ = 0.81°, $H_c$ = 4 x $10^5$ A/m , $T_c$ = 200°C, and $T_{comp}$ = 90°C. That is, no significant difference in the magnetic properties was observed between both samples. It is apparent from these results that the presence or absence of Nb and Pt in the recording layer has little or no effect on the magnetic properties, particularly $\theta_k$ ( Kerr-rotation angle) which is important in reading information and $H_c$ (coercive force) which is important in maintaining data.

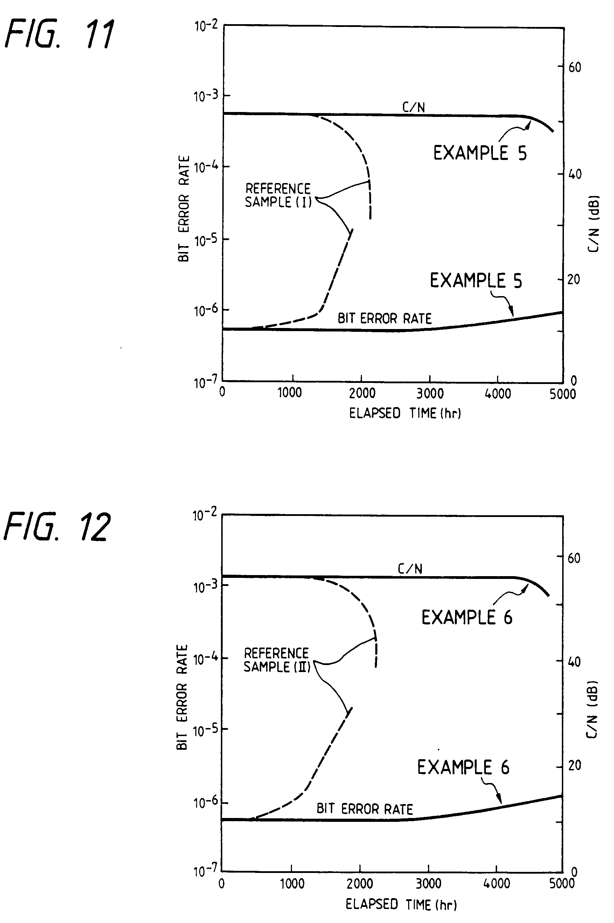

Thereafter, the above-described two samples were subjected to evaluation of the characteristics and service life for use as a magnetic disk. With respect to the characteristics, the two samples exhibited the same C/N (carrier-to-noise ratio), i.e., 55 dB (f = 2.22 MHz; a laser output of 8 mW; and a magnetic field of 3.2 x $10^4$ A/m. In the service life test, these disks were allowed to stand in an atmosphere having a temperature of 60°C and a relative humidity of 95% to study the change in the C/N and error rate with time. The results were as shown in Fig. 11. Specifically, with respect to the C/N, the reference sample (I) exhibited a rapid deterioration after about 1500 hr, while the sample of the present invention exhibited only a slight decrease after about 4500 hr. The rapid deterioration of the reference sample (I) suggests that the oxidation of the recording layer progressed to the surface of the substrate. Further, the bit error rate of the reference sample (I) began to increase after about 300 hr and rapidly increased after about 500 hr, while the sample of the present invention exhibited only a slight increase after about 3000 hr.

The same results were obtained when Ti, Ta, Aℓ or Cr was used instead of Nb and when Pd, Rh or Au were used instead of Pt. This shows that the addition of elements respectively selected from the above-described two groups to the recording layer is very effective in improving the corrosion resistance of the recording layer.

In this connection, attention should be given to the amount of addition of the above-described additive elements. The perpendicular magnetic anisotropy energy Ku of the recording layer depends on the amount of addition of the additive elements, and this amount has a great effect on the characteristics of the disk. In general, it is believed that the recording layer is stably present when the perpendicular magnetic anisotropy energy Ku is 2 x $10^5$ $J/cm^3$ or more. Therefore, a perpendicualr magnetic anisotropy energy Ku of less than this value is undesirable. The study on this matter has revealed that when the additive elements are, e.g., Pt and Nb, the addition in an amount of 15 atomic % or less, preferably 6 to 13 atomic % is suitable.

Example 6

First of all, sputter etching of a substrate 1 (made of glass or transparent plastic) was conducted by making use of a discharge gas comprising Ar. Thereafter, sputtering was conducted for 15 min by making use of a discharge gas comprising Ar and a sputter target comprising $Si_3N_4$ sinter under a discharge gas pressure of 1 Pa at an input RF power density of 4.2 W/cm$^2$, thereby forming a silicon nitride underfilm 2 having a thickness of 60 nm and a refractive index n of 2.3. Then, sputtering was further conducted for 1.5 min by making use of a discharge gas comprising Ar and a sputter target comprising an alloy having the following composition, $(Gd_{0.5}Nd_{0.5})_{35}(Fe_{0.6}Co_{0.4})_{71}(Cr_{0.3}Pt_{0.7})_4$, under a discharge gas pressure of 0.5 Pa at an input RF power density of 4.2 W/cm$^2$, thereby forming a first recording layer 103 having a thickness of 15 nm Subsequently, sputtering was conducted for 7.5 min by making use of a discharge gas comprising Ar and a sputter target comprising an alloy having the following composition, $Tb_{24}Fe_{55}CO_{15}(Nb_{0.3}Pt_{0.7})_6$, under a discharge gas pressure of 0.5 Pa at an input RF power density of 4.5 W/cm$^2$. Further, the atmospheric gas was switched over from Ar to $N_2$ without discontinuing the discharge, followed by sputtering under the same conditions as those described above, thereby forming a second recording layer 104 having a thickness of 85 nm.

A sample which comprised a first recording layer composed of Gd, Nd, Fe and Co only, i.e., an alloy in which Cr, Nb and Pt are removed from the above-described recording layer composition, and a second recording layer composed of Tb, Fe and Co only and in which no sputtering in a $N_2$ gas atmosphere in the final step had been conducted was prepared as a reference sample (II).

The magnetic properties of the two samples prepared above were evaluated. The sample of the present invention had the following magnetic properties: $\theta_k = 0.83°$ and $H_c = 4.8 \times 10^5$ A/m, while the reference sample (II) had the following magnetic properties: $\theta_k = 0.85°$ and $H_c = 5.6 \times 10^5$ A/m. That is, in this case as well, as with Example 5, no significant difference in the magnetic properties was observed between the sample of the present invention and the reference sample.

Thereafter, the above-described two samples were subjected to evaluation of the characteristics and service life for use as a magnetic disk. With respect to the characteristics, the two samples exhibited the same C/N, i.e., 57 dB (f = 2.22 MHz; and a laser output of 8 mW). In the service life test, these disks were allowed to stand in an atmosphere having a temperature of 60°C and a relative humidity of 95% to study the change in the C/N and error rate with time. The results were as shown in Fig. 12. Specifically, the C/N of the reference sample (II) began to decrease after 500 hr and exhibited a rapid deterioration after about 1000 hr, while the C/N of the sample of the present invention was hardly changed until the elapsed time exceeded 4000 hr and thereafter slightly decreased. Further, the bit error rate of the reference sample (II) began to increase after 300 hr and rapidly increased after about 600 hr, while the bit error rate of the sample of the present invention brought about little or no change until the elapsed time exceeded about 3000 hr and thereafter only a slight increase.

Example 7

Fig. 13 is a schematic cross-sectional view of the magneto-optical recording medium prepared in the present Example according to the present invention and comprising a substrate 1, a first recording layer 103, and a second recording layer 104.

The alloy composition of each of the first recording layer and the second recording layer of the magneto-optical recording medium of the present Example and the magnetic properties and the results of the evaluation on the service life thereof are shown in Table 1. Conditions of the formation of the first and second recording layers and evaluation of the characteristics and service life were the same as those of Example 5.

It is apparent from the results shown in Table 1 that in a magneto-optical recording medium having recording layers comprising various rare earth element-iron group alloys, the simultaneous addition of at least one passivated state forming element selected from among Ti, Ta, Nb, Aℓ and Cr and at least one noble metal group element selected from among Pt, Pb, Rh and Au to each recording layer and the provision of a layer containing nitrogen on the surface of the recording layer brings about a very excellent effect of improving the corrosion resistance of the recording layer.

Table 1

| Magneto-optical recording film (I) | Magneto-optical recording film (II) | $\Theta k$ | C/N | Time for causing change in C/N | Service life Error rate (0hr) | Service life Error rate (5000hr) |
|---|---|---|---|---|---|---|
| $(Gd_{0.7}Pr_{0.3})_{21}(Fe_{0.7}Co_{0.3})_{74}(Pd_{0.7}Ti_{0.3})_5$ | $Tb_{31}Fe_{64}Cr_5$ | 0.46 | 55 | 3900 hr | $4 \times 10^{-6}$ | $8 \times 10^{-6}$ |
| $(Nd_{0.5}Ce_{0.5})_{21}(Fe_{0.6}Co_{0.4})_{74}(Rh_{0.7}Ta_{0.3})_5$ | $Dy_{30}Fe_{65}Ta_5$ | 0.47 | 55 | 3500 hr | $4 \times 10^{-6}$ | $1 \times 10^{-5}$ |
| $(Dy_{0.6}Sm_{0.4})_{24}(Fe_{0.6}Ce_{0.4})_{69}(Pt_{0.7}Al_{0.3})_6$ | $Ho_{29}Co_{66}Ti_5$ | 0.44 | 53 | 3600 hr | $4 \times 10^{-6}$ | $9 \times 10^{-6}$ |
| $(Gd_{0.8}Ho_{0.2})_{23}(Fe_{0.6}Co_{0.4})_{70}(Nb_{0.7}Au_{0.3})_7$ | $Tb_{30}Co_{60}Al_{10}$ | 0.45 | 54 | 3700 hr | $4 \times 10^{-6}$ | $8 \times 10^{-6}$ |
| $(Gd_{0.5}Nd_{0.5})_{23}Co_{72}(Pt_{0.7}Nb_{0.3})_5$ | $Tb_{31}Fe_{64}Cr_5$ | 0.45 | 54 | 3400 hr | $4 \times 10^{-6}$ | $9 \times 10^{-6}$ |
| $(Tb_{0.6}Sm_{0.4})_{23}Co_{72}(Ti_{0.7}Rh_{0.3})_5$ | $Tb_{25}Fe_{56}Co_{15}Nb_4$ | 0.42 | 53 | 3600 hr | $4 \times 10^{-6}$ | $8 \times 10^{-6}$ |
| $(Tb_{0.6}Ce_{0.4})_{24}Co_{71}(Pd_{0.7}Cr_{0.3})_5$ | $Tb_{30}Fe_{62}Pt_5Nb_3$ | 0.40 | 52 | 3800 hr | $4 \times 10^{-6}$ | $7 \times 10^{-6}$ |
| $(Gd_{0.8}Ho_{0.2})_{21}(Fe_{0.8}Co_{0.2})_{69}(Al_{0.4}Au_{0.6})_{10}$ | $Tb_{30}Fe_{62}Pt_5Nb_3$ | 0.42 | 53 | 3900 hr | $4 \times 10^{-6}$ | $7 \times 10^{-6}$ |
| $Sm_{21}(Fe_{0.8}Co_{0.2})_{74}(Ti_{0.7}Pd_{0.3})_5$ | $Tb_{38}Fe_{62}Al_3Pt_5$ | 0.40 | 52 | 3600 hr | $4 \times 10^{-6}$ | $8 \times 10^{-6}$ |
| $Nd_{21}Co_{71}Cr_3Pt_5$ | $Tb_{32}Fe_{60}Al_3Pd_5$ | 0.43 | 53 | 3400 hr | $4 \times 10^{-6}$ | $7 \times 10^{-6}$ |
| $(Tb_{0.4}Gd_{0.6})_{44}Fe_{46}Co_{10}$ | $Tb_{31}Fe_{64}Cr$ | 0.47 | 55 | 3500 hr | $4 \times 10^{-6}$ | $1 \times 10^{-5}$ |
| $(Tb_{0.6}Nd_{0.4})_{26}Fe_{55}Co_{15}$ | $Tb_{64}Fe_{56}Co_{15}$ | 0.45 | 54 | 3200 hr | $4 \times 10^{-6}$ | $2 \times 10^{-5}$ |
| $Nd_{24}Co_{71}Cr_3Pt_5$ | $Tb_{27}Fe_{58}Co_{15}$ | 0.42 | 53 | 3200 hr | $4 \times 10^{-6}$ | $2 \times 10^{-5}$ |
| $(Gd_{0.7}Nd_{0.3})_{27}Fe_{60}Co_{11}Nb_2Pt_7$ | $Ho_{24}Fe_{59}Co_{15}$ | 0.47 | 55 | 3200 hr | $4 \times 10^{-6}$ | $3 \times 10^{-5}$ |

According to the present invention, when an element ($X_2$) having magnetic properties such that the magnetic moment of an iron group element is apparently increased and corrosion resistance such that although pitting corrosion is remarkably suppressed, an effect of preventing wet corrosion and oxidation is poor and an element ($X_1$) having magnetic properties such that the magnetic moment of an iron group element is apparently decreased and corrosion resistance such that, although oxidation and wet corrosion are remarkably suppressed, an effect of suppressing pitting corrosion is relatively poor are simultaneously added to a rare earth element-iron group element alloy, the resistance to all types of corrosion, i.e., oxidation, wet corrosion and pitting corrosion, can be improved without deteriorating the magnetic properties and magneto-optical properties. In this case, the corrosion resistance is superior to the corrosion resistance inherent in each additive element. That is, the simultaneous addition of the two elements brings about not an additive effect but a synergetic effect. Further, the magnetic properties can freely be controlled by regulating the concentration of each of the rare earth element, iron group element, additive element $X_1$ and

11

additive element $X_2$.

The element $X_2$ has an effect of increasing the reflectivity of light on the surface of the recording film, which greatly contributes to an improvement in the recording/reproducing characteristics.

Further, the present invention enables a magneto-optical disk having a sufficiently long service life to be prepared without the need of forming a protective film, which brings about an effect of simplifying the manufacturing process.

The above-described effects have made it possible to prepare a magneto-optical disk having a long service life and high reliability.

## Claims

1. A magneto-optical recording medium comprising a substrate (1) and, directly or indirectly provided thereover, a magneto-optical recording film (3; 103, 104) made of an alloy having perpendicular magnetic anisotropy and composed of at least one rare earth element (RE), at least one iron group element (TM), at least one element $X_1$ selected from Nb, Ti, Ta, Cr and Al, and at least one element $X_2$ selected from Pt, Au, Pd and Rh, characterized in that the ratio of the elements $X_1$ and $X_2$ is selected to have substantially no net effect on the magnetic moment of the iron group element (TM).

2. The recording medium of claim 1, wherein the total amount of said element $X_1$ and said element $X_2$ is 20 atomic % or less, preferably 15 atomic % or less.

3. The recording medium of claim 2, wherein the amount of said element $X_1$ is 1 to 10 atomic % and the amount of said element $X_2$ is 2 to 10 atomic %.

4. The recording medium of claim 3, wherein the molar ratio $X_2/X_1$ of said element $X_2$ to said element $X_1$ is 1/1 to 3/1, preferably 2/1 to 4/3.

5. The recording medium of any of claims 1 to 4, wherein said element RE is at least one of the elements Tb, Gd, Nd, Pr, Sm, Dy, Ho, Ce and Yb, preferably one of the elements Tb, Gd, Dy, Ho, Pr and Ce, and said element TM is at least one of the elements Fe, Co and Ni, preferably Fe or Co.

6. The recording medium of any of claims 1 to 5, wherein said alloy is amorphous.

7. The recording medium of any of claims 1 to 6, wherein the concentrations of said element $X_1$ and/or said element $X_2$ at a portion near the boundary between said substrate and said magneto-optical recording film and a portion near the surface of said magneto-optical recording film remote from said substrate are higher than at other portions of said magneto-optical recording film, the total amount of said elements $X_1$ and $X_2$ in said other portions being 20 atomic % or less.

8. The magneto-optical recording medium of claim 1 for use in a system of recording, reproducing and erasing information by means of a laser beam,
   wherein said magneto-optical recording film (103, 104) includes first and second layers (103, 104), one (103) having a large force-rotation angle or a large Faraday rotation angle or both and the other (104) having a high coercive force and an axis of easy magnetization in a direction perpendicular to said substrate (1), and
   wherein a layer (2) containing nitrogen is provided near the surface of said recording layer (103, 104) on the information read side and/or on the side opposite thereto.

9. The recording medium of claim 8, wherein said first recording layer (103) is a recording layer comprising an alloy, preferably an amorphous alloy, composed mainly of at least one of the elements Gd, Tb, Dy, Ho, Nd, Pr, Sm and Co, and at least one of the lements Fe and Co.

10. The recording medium of claim 8 or 9, wherein said second recording layer (104) is a recording layer comprising an alloy having perpendicular magnetic anisotropy, preferably an amorphous alloy, composed mainly of at least one of the elements Tb, Dy, and Ho, and at least one of the elements Fe and Co.

**11.** The recording medium of any of claims 1 to 10, wherein the amount of perpendicular magnetization energy Ku is more than $2 \times 10^5$ J/cm$^3$ when the element such as $X_1$ and $X_2$ is added to rare earth-transition metal alloy.

**Patentansprüche**

**1.** Magneto-optischer Aufzeichnungsträger mit einem Substrat (1) und einem direkt oder indirekt auf diesem ausgebildeten magneto-optischen Aufzeichnungsfilm (3; 103, 104) aus einer Legierung mit rechtwinkliger magnetischer Anisotropie, der aus mindestens einem Seltenerdelement (RE) und mindestens einem Eisengruppenelement (TM), mindestens einem Element $X_1$, das aus Nb, Ti, Ta, Cr und Al ausgewählt ist, und mindestens einem Element $X_2$ besteht, das aus Pt, Au, Pd und Rh ausgewählt ist, **dadurch gekennzeichnet**, daß das Verhältnis der Elemente $X_1$ und $X_2$ so ausgewählt ist, daß im wesentlichen keine Nettoauswirkung auf das magnetische Moment des Eisengruppenelements (TM) vorliegt.

**2.** Aufzeichnungsträger nach Anspruch 1, bei dem die Gesamtmenge des Elements $X_1$ und des Elements $X_2$ 20 Atom-% oder weniger, vorzugsweise 15 Atom-% oder weniger beträgt.

**3.** Aufzeichnungsträger nach Anspruch 2, bei dem die Menge des Elements $X_1$ 1 bis 10 Atom-% und die Menge des Elements $X_2$ 2 bis 10 Atom-% beträgt.

**4.** Aufzeichnungsmedium nach Anspruch 3, bei dem das molare Verhältnis $X_2/X_1$ des Elements $X_2$ zum Element $X_1$ 1/1 bis 3/1, vorzugsweise 2/1 bis 4/3 beträgt.

**5.** Aufzeichnungsträger nach einem der Ansprüche 1 bis 4, bei dem das Element RE mindestens eines der Elemente Tb, Gd, Nd, Pr, Sm, Dy, Ho, Ce und Yb, vorzugsweise eines der Elemente Tb, Gd, Dy, Ho, Pr und Ce ist, und das Element TM mindestens eines der Elemente Fe, Co und Ni, vorzugsweise Fe oder Co ist.

**6.** Aufzeichnungsträger nach einem der Ansprüche 1 bis 5, bei dem die Legierung amorph ist.

**7.** Aufzeichnungsträger nach einem der Ansprüche 1 bis 6, bei dem die Konzentrationen des Elements $X_1$ und/oder des Elements $X_2$ in einem Bereich nahe der Grenze zwischen dem Substrat und dem magneto-optischen Aufzeichnungsfilm sowie einem Bereich nahe der Oberfläche des magneto-optischen Aufzeichnungsfilms entfernt vom Substrat höher sind als in anderen Bereichen des magneto-optischen Aufzeichnungsfilms, wobei die Gesamtmenge der Elemente $X_1$ und $X_2$ in den anderen Bereichen 20 Atom-% oder weniger beträgt.

**8.** Magneto-optischer Aufzeichnungsträger nach Anspruch 1 zur Verwendung bei einem System zum Aufzeichnen, Wiedergeben und Löschen von Information durch einen Laserstrahl;
- wobei der magneto-optische Aufzeichnungsfilm (103, 104) eine erste und eine zweite Schicht (103, 104) aufweist, von denen eine (103) einen großen Kraft-Dreh-Winkel oder einen großen Farraday-Rotationswinkel oder beides aufweist, und der andere (104) eine hohe Koerzitivkraft und eine Achse leichter Magnetisierung in einer Richtung rechtwinklig zum Substrat (1) aufweist; und
- bei dem eine Stickstoff enthaltende Schicht (2) nahe der Oberfläche der Aufzeichnungsschicht (103, 104) auf der Informationsleseseite und/oder auf der dieser Seite gegenüberliegenden Seite vorhanden ist.

**9.** Aufzeichnungsträger nach Anspruch 8, bei dem die erste Aufzeichnungsschicht (103) eine Aufzeichnungsschicht mit einer Legierung, vorzugsweise einer amorphen Legierung ist, die hauptsächlich aus einem der Elemente Gd, Tb, Dy, Ho, Nd, Pr, Sm und Ce sowie mindestens einem der Elemente Fe und Co besteht.

**10.** Aufzeichnungsträger nach Anspruch 8 oder Anspruch 9., bei dem die zweite Aufzeichnungsschicht (104) eine Aufzeichnungsschicht ist, die eine Legierung mit rechtwinklig magnetischer Anisotropie, vorzugsweise eine amorpe Legierung aufweist, die hauptsächlich aus mindestens einem der Elemente Tb, Dy und Ho sowie mindestens einem der Elemente Fe und Co besteht.

**11.** Aufzeichnungsträger nach einem der Ansprüche 1 bis 10, bei dem die Größe der Energie bei rechtwinkliger Magnetisierung Ku mehr als $2 \times 10^5$ J/cm$^3$ ist, wenn ein Element wie $X_1$ und $X_2$ der Seltenerd/Übergangsmetall-Legierung zugesetzt wird.

**Revendications**

**1.** Support d'enregistrement magnéto-optique comprenant un substrat (1) et, directement ou indirectement au-dessus du substrat, une pellicule d'enregistrement magnéto-optique (3;103,104) formée d'un alliage présentant une anisotropie magnétique perpendiculaire et constitué par au moins un élément d'une terre rare (RE), au moins un élément (TM) du groupe du fer, au moins un élément $X_1$ choisi parmi Nb, Ti, Ta, Cr et Al, et au moins un élément $X_2$ choisi parmi Pt, Au, Pd et Rh, caractérisé en ce que le rapport des éléments $X_1$ et $X_2$ est choisi de manière à n'avoir sensiblement aucun effet net sur le moment magnétique de l'élément (TM) du groupe du fer.

**2.** Support d'enregistrement selon la revendication 1, selon lequel la quantité totale dudit élément $X_1$ et dudit élément $X_2$ est égale à 20 % d'atomes ou moins, de préférence 15 % d'atomes ou moins.

**3.** Support d'enregistrement selon la revendication 2, dans lequel la quantité dudit élément $X_1$ est comprise entre 1 et 10 % d'atomes et la quantité dudit élément $X_2$ est comprise entre 2 et 10 % d'atomes.

**4.** Support d'enregistrement selon la revendication 3, dans lequel le rapport molaire $X_2/X_1$ dudit élément $X_2$ audit élément $X_1$ est compris entre 1/1 et 3/1, de préférence entre 2/1 et 4/3.

**5.** Support d'enregistrement selon l'une quelconque des revendications 1 à 4, dans lequel ledit élément (RE) est au moins l'un des éléments Tb, Gd, Nd, Pr, Sm, Dy, Ho, Ce et Yb, de préférence l'un des éléments Tb, Gd, Dy, Ho, Pr et Ce, et ledit élément TM est au moins l'un des éléments Fe, Co et Ni, de préférence Fe ou Co.

**6.** Support d'enregistrement selon l'une quelconque des revendications 1 à 5, dans lequel ledit alliage est amorphe.

**7.** Support d'enregistrement selon l'une quelconque des revendications 1 à 6, dans lequel les concentrations dudit élément $X_1$ et/ou dudit élément $X_2$ dans une partie proche de la limite entre ledit substrat et ladite pellicule d'enregistrement magnéto-optique et une partie proche de la surface de ladite pellicule d'enregistrement magnéto-optique distante dudit substrat sont plus élevées que dans l'autre partie de ladite pellicule d'enregistrement magnéto-optique, la quantité totale desdits éléments $X_1$ et $X_2$ dans lesdites autres parties étant égale à 20 % d'atomes ou moins.

**8.** Support d'enregistrement magnéto-optique selon la revendication 1, destiné à être utilisé dans un système d'enregistrement, de lecture et d'effacement d'informations au moyen d'un faisceau laser,
dans lequel ladite pellicule d'enregistrement magnéto-optique (103,104) comprend des première et seconde couches (103,104), l'une (103) possédant un angle élevé de rotation forcée ou un angle élevé de rotation Faraday ou les deux, l'autre (104) possédant une force coercitive élevée et un axe d'aimantation facile dans une direction perpendiculaire audit substrat (1), et
dans lequel une couche (2) contenant de l'azote est prévue à proximité de la surface de ladite couche d'enregistrement (103,104) sur le côté de lecture des informations et/ou sur le côté opposé.

**9.** Support d'enregistrement selon la revendication 8, dans lequel ladite première couche d'enregistrement (103) est une couche d'enregistrement comprenant un alliage, de préférence un alliage amorphe, constitué principalement par au moins l'un des éléments Gd, Tb, Dy, Ho, Nd, Pr, Sm et Ce, et au moins l'un des éléments Fe et Co.

**10.** Support d'enregistrement selon la revendication 8 ou 9, dans lequel ladite seconde couche d'enregistrement (104) est une couche d'enregistrement comprenant un alliage présentant une anisotropie magnétique perpendiculaire, de préférence un alliage amorphe, constitué principalement par au moins l'un des éléments Tb, Dy et Ho, et au moins l'un des éléments Fe et Co.

11. Support d'enregistrement selon l'une quelconque des revendications 1 à 10, dans lequel la quantité d'énergie d'aimantation perpendiculaire Ku est supérieure à $2 \times 10^5$ J/cm$^3$, lorsque les éléments tels que $X_1$ et $X_2$ sont ajoutés à un alliage terre rare - métal de transition.

# FIG. 1

# FIG. 2

## FIG. 3

## FIG. 4

## FIG. 5

## FIG. 6

## FIG. 7

## FIG. 8

# FIG. 9

## FIG. 10

104
103
2
1

## FIG. 13

104
103
1

*FIG. 11*

*FIG. 12*